# EUROPEAN PATENT APPLICATION

(11) **EP 4 394 195 A1**
(43) Date of publication of application: **03.07.2024**
(21) Application number: 22861343.6
(22) Date of filing: 23.08.2022
(51) Int. Cl.: F16C 17/14, F16C 33/24

(54) **SLIDING STRUCTURE**

(30) Priority: 27.08.2021 JP 2021138707
(71) Applicant: SANYU TOKUSYU SEIKO CO., LTD., Miyoshi-shi, Aichi 470-0207 (JP); National University Corporation Tokai National Higher Education and Research System, Nagoya-shi Aichi 464-0814 (JP)
(72) Inventor: HORIBA Natsuo, Miyoshi-shi Aichi 470-0207 (JP); KOUSAKA Hiroyuki, Gifu-shi Gifu 501-1193 (JP)
(74) Representative: Kuhnen & Wacker Patent- und Rechtsanwaltsbüro PartG mbB
(86) International application number: PCT/JP2022/031662
(87) International publication number: WO 2023/027055

(57) **Abstract**

A sliding assembly (1) with a simple structure for smooth water-lubricated sliding includes first and second sliding elements (10, 20) each having a sliding surface. The sliding surfaces come in contact with each other with a water layer (30) in between to allow the first and second sliding elements (10, 20) to slide relative to each other. Each of the first and second sliding elements (10, 20) includes a base member (11, 21) and a hard layer (12, 22) as the sliding surface on a surface of the base member (11, 21). The hard layers (12, 22) in the first and second sliding elements (10, 20) include nanosilica layers (13, 23) supporting nanosilica particles. The nanosilica layers (13, 23) each have a surface covered with the water layer (30), allowing water-lubricated sliding with an appropriate sliding velocity under an appropriate load. The first and second sliding elements (10, 20) slide relative to each other with low friction.

## Description

### FIELD

The present invention relates to a sliding assembly, and particularly, to a sliding assembly using water lubrication.

### BACKGROUND

Mechanical seals containing a ceramic material with water lubrication have been used for bearings in submersible pumps or other components (refer to, for example, Patent Literature 1). Patent Literature 1 describes a technique used in a pin-on-disk test for a ceramic material to have water lubricity using a coating with siloxane linkages on the ceramic surface by adding a silane coupling agent to the ceramic material.

Another known technique uses a hard carbon film of, for example, diamond-like carbon as a coating material for, for example, sliding members (refer to, for example, Patent Literature 2).

### CITATION LIST

### PATENT LITERATURE

Patent Literature 1: Japanese Unexamined Patent Application Publication No. 01-290577
Patent Literature 2: Japanese Patent No. 6095090

### BRIEF SUMMARY

### TECHNICAL PROBLEM

The ceramic material used with the known technique described in Patent Literature 1 is difficult to process and is costly. Such a known technique has practical issues resulting from the addition of an appropriate amount of aqueous solution to a friction surface.

The known technique described in Patent Literature 2 uses workhours for a conformity process between a first sliding member and a second sliding member in a fluid-free environment until the average height of droplets on the first sliding member is smaller than the amount of elastic deformation in the first sliding member under the load from the second sliding member during sliding between the first sliding member and the second sliding member.

In response to the above issues, one or more aspects of the present invention are directed to a sliding assembly with a simple structure that allows smooth water-lubricated sliding.

### SOLUTION TO PROBLEM

A sliding assembly according to one or more aspects of the present invention includes a first sliding element having a sliding surface and a second sliding element having a sliding surface. The first sliding element includes a first base member and a first hard layer as the sliding surface on a surface of the first base member. The second sliding element includes a second base member and a second hard layer as the sliding surface on a surface of the second base member. The sliding surface of the first sliding element and the sliding surface of the second sliding element come in contact with each other with a water layer in between to allow the first sliding element and the second sliding element to slide relative to each other. At least one of the first hard layer in the first sliding element or the second hard layer in the second sliding element includes a nanosilica layer supporting nanosilica particles.

In the sliding assembly according to one or more aspects of the present invention, the at least one of the first hard layer or the second hard layer has a surface with hydroxyl groups.

In the sliding assembly according to one or more aspects of the present invention, the nanosilica layer is supported by the at least one of the first hard layer or the second hard layer based on covalent bonds between the hydroxyl groups activated in the at least one of the first hard layer or the second hard layer and hydroxyl groups in the nanosilica particles.

In the sliding assembly according to one or more aspects of the present invention, each of the first hard layer in the first sliding element and the second hard layer in the second sliding element includes the nanosilica layer.

In the sliding assembly according to one or more aspects of the present invention, each of the first hard layer and the second hard layer has a Vickers hardness of 1000 Hv or higher.

In the sliding assembly according to one or more aspects of the present invention, at least one of the first hard layer in the first sliding element or the second hard layer in the second sliding element is formed from diamond-like carbon on a surface of at least one of the first base member or the second base member.

In the sliding assembly according to one or more aspects of the present invention, the diamond-like carbon contains silicon.

In the sliding assembly according to one or more aspects of the present invention, at least one of the first hard layer in the first sliding element or the second hard layer in the second sliding element is a part of at least one of the first base member or the second base member.

In the sliding assembly according to one or more aspects of the present invention, the at least one of first base member or the second base member including the at least one of the first hard layer or the second hard layer is formed from a ceramic material.

In the sliding assembly according to one or more aspects of the present invention, the first hard layer in the first sliding element is a part of the first base member, and the second hard layer in the second sliding element is a part of the second base member. Each of the first base member including the first hard layer and the second base member including the second hard layer is formed from a ceramic material.

The sliding assembly according to the above aspects of the present invention includes the nanosilica layer having a surface covered with the water layer to have water lubricity with an appropriate sliding velocity under an appropriate load, causing the first and second sliding elements to slide relative to each other with low friction. The sliding assembly with the simple structure allows smooth water-lubricated sliding.

### BRIEF DESCRIPTION OF DRAWINGS

FIG. 1 is a schematic cross-sectional view of a sliding assembly according to a first embodiment of the present invention.
FIG. 2 is a schematic cross-sectional view of a sliding assembly according to a second embodiment of the present invention.
FIG. 3 is a schematic cross-sectional view of a sliding assembly according to a third embodiment of the present invention.
FIG. 4 is a schematic cross-sectional view of a sliding assembly according to a fourth embodiment of the present invention.
FIG. 5 is a perspective view of a pair of test pieces to undergo a friction and wear test.
FIG. 6 is a cross-sectional view of a friction and wear tester and test tools used in the friction and wear test.
FIG. 7 is a graph showing the difference between oxygen counts on test pieces before and after nanosilica particles are supported.
FIG. 8 is a graph showing friction and wear test results of a first example and a first comparative example.
FIG. 9 is a graph showing friction and wear test results of a second example and a second comparative example.
FIG. 10 is a graph showing friction and wear test results of a third example.
FIG. 11 is a graph showing friction and wear test results of a fourth example and a fifth example.
FIG. 12 is a graph showing friction and wear test results of a sixth example.
FIG. 13 is a graph showing friction and wear test results of a seventh example and a third comparative example.
FIG. 14 is a graph showing friction and wear test results of an eighth example.
FIG. 15 is a graph showing friction and wear test results of a ninth example.

### DETAILED DESCRIPTION

Sliding assemblies according to embodiments of the present invention will now be described with reference to the drawings.

### First Embodiment

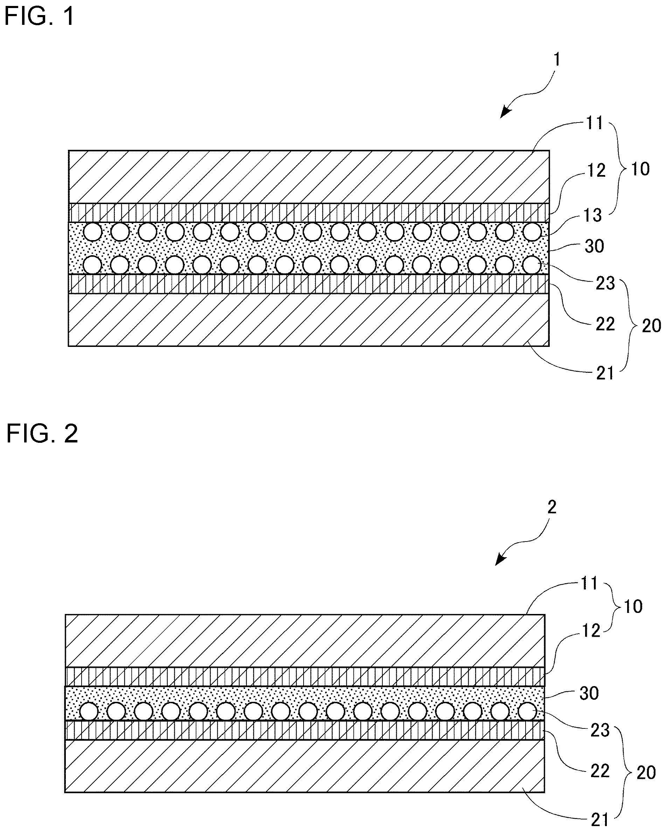

A sliding assembly 1 according to a first embodiment of the present invention will be described first with reference to FIG. 1. FIG. 1 is a schematic cross-sectional view of the sliding assembly 1 according to the first embodiment of the present invention.

The sliding assembly 1 includes a first sliding element 10 and a second sliding element 20 each having a sliding surface. The sliding surfaces come in contact with each other with a water layer 30 in between to allow the first and second sliding elements 10 and 20 to slide relative to each other.

The first sliding element 10 includes a base member 11 and a hard layer 12 as a sliding surface on a surface of the base member 11. The second sliding element 20 includes a base member 21 and a hard layer 22 as a sliding surface on a surface of the base member 21.

The base members 11 and 21 are steel materials and face each other with their surfaces parallel to each other. The base members 11 and 21 may each be, for example, a piece of SUS440C stainless steel processed into a predetermined shape and quenched to have a quenched hardness HRC of 58. The surfaces of the base members 11 and 21 facing each other undergo lapping to have a surface roughness Ra of 0.01.

The hard layers 12 and 22 are located on surfaces of the base members 11 and 21 facing each other. More specifically, the hard layers 12 and 22 are each formed by coating using silicon-containing diamond-like carbon (hereafter referred to as Si-DLC).

The hard layers 12 and 22 in the first and second sliding elements 10 and 20 include the respective nanosilica layers 13 and 23 supporting nanosilica particles.

The nanosilica layers 13 and 23 are described in detail. The hard layers 12 and 22 undergo atmospheric-pressure plasma processing with an Ar gas to activate surface hydroxyl groups. The hard layers 12 and 22 then have surfaces with activated surface hydroxyl groups, on which water-dispersed colloidal silica is applied to allow surface hydroxyl groups to be attached on water-dispersed nanosilica particles. During drying, hydroxyl groups on the surfaces of the hard layers 12 and 22 and hydroxyl groups on the surfaces of nanosilica particles are dehydrated and condensed to form covalent bonds, thus forming the nanosilica layers 13 and 23 supporting nanosilica particles on the hard layers 12 and 22. Although this structure uses covalent bonds between hydroxyl groups on the surfaces of the hard layers 12 and 22 and hydroxyl groups on the surfaces of nanosilica particles through dehydration and condensation to reduce nanosilica particles that separate during sliding in water, covalent bonds in an early stage may not be formed. Before the first and second sliding elements 10 and 20 are used, nanosilica particles are to cover the hard layers 12 and 22 without separating from the layers. The atmospheric-pressure plasma processing may use a gas other than an Ar gas, such as an oxygen gas or a nitrogen gas that can activate surface hydroxyl groups. The atmospheric-pressure plasma for activating surface hydroxyl groups may be replaced by a method using irradiation of, for example, ultraviolet rays, electron beams, or γ-rays.

The water layer 30 is located between the nanosilica layers 13 and 23 to cover the surfaces of the nanosilica layers 13 and 23. The nanosilica layers 13 and 23 are stacked on each other with the water layer 30 in between. The structure then slides with an appropriate sliding velocity under an appropriate load to have water lubricity.

### Second Embodiment

A sliding assembly 2 according to a second embodiment of the present invention will now be described with reference to FIG. 2. FIG. 2 is a schematic cross-sectional view of the sliding assembly 2 according to the second embodiment of the present invention. The same reference numerals denote the same components in the first embodiment described above, and such components will not be described in detail (the same applies to other embodiments).

In the above first embodiment, the hard layers 12 and 22 in the first and second sliding elements 10 and 20 include the respective nanosilica layers 13 and 23. In the present embodiment, as shown in FIG. 2, a hard layer 22 in a second sliding element 20 alone includes a nanosilica layer 23, whereas a hard layer 12 in a first sliding element 10 includes no nanosilica layer 13.

The structure according to the present embodiment thus includes a water layer 30 between a surface of the hard layer 12 in the first sliding element 10 and the nanosilica layer 23 in the second sliding element 20.

### Third Embodiment

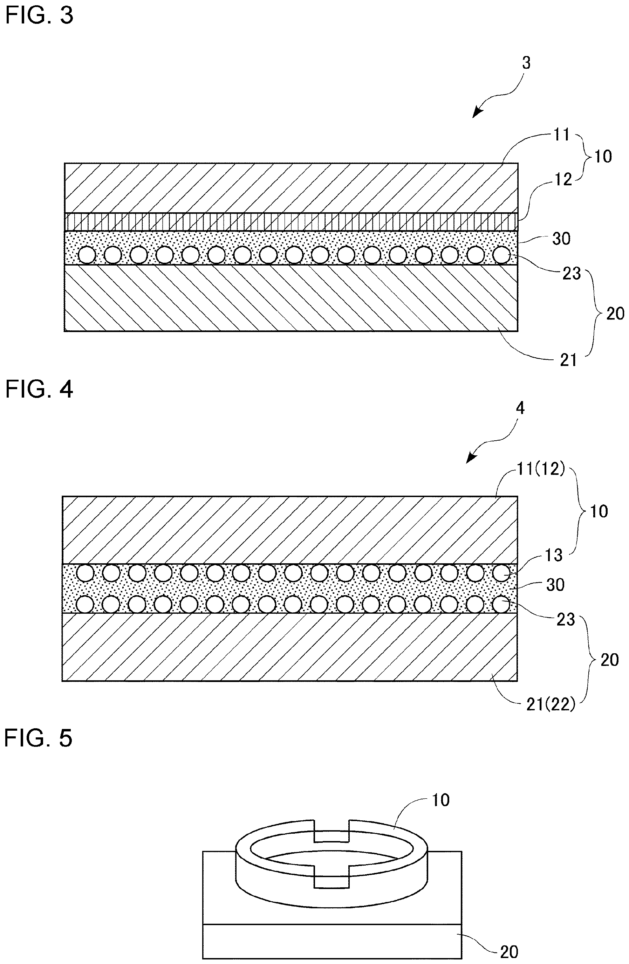

A sliding assembly 3 according to a third embodiment of the present invention will now be described with reference to FIG. 3. FIG. 3 is a schematic cross-sectional view of the sliding assembly 3 according to the third embodiment of the present invention.

In the present embodiment, a first sliding element 10 includes a base member 11 formed from the same steel material (e.g., SUS440C) as in the first embodiment. In contrast, a second sliding element 20 includes a base member 21 formed from a ceramic material (e.g., silicon nitride or silicon carbide). The base member 21 also serves as the hard layer 22 in the first embodiment. The base member 21 in the second sliding element 20 alone includes a nanosilica layer 23 on its surface, whereas a hard layer 12 in the first sliding element 10 includes no nanosilica layer 13.

The structure according to the present embodiment thus includes a water layer 30 between a surface of the hard layer 12 in the first sliding element 10 and the nanosilica layer 23 in the second sliding element 20.

### Fourth Embodiment

A sliding assembly 4 according to a fourth embodiment of the present invention will now be described with reference to FIG. 4. FIG. 4 is a schematic cross-sectional view of the sliding assembly 4 according to the fourth embodiment of the present invention.

In the present embodiment, a first sliding element 10 includes a base member 11 formed from a ceramic material (e.g., silicon nitride or silicon carbide). The base member 11 also serves as the hard layer 12 in the first embodiment. The base member 11 in the first sliding element 10 includes a nanosilica layer 13 on its surface. Similarly, a second sliding element 20 includes a base member 21 formed from a ceramic material (e.g., silicon nitride or silicon carbide). The base member 21 also serves as the hard layer 22 in the first embodiment. The base member 21 in the second sliding element 20 includes a nanosilica layer 23 on its surface.

The structure according to the present embodiment thus includes a water layer 30 between the nanosilica layer 23 in the first sliding element 10 and the nanosilica layer 23 in the second sliding element 20.

### Overview of First to Fourth Embodiments

The sliding assemblies 1 to 4 according to the first to fourth embodiments of the present invention each include the first sliding element 10 having a sliding surface and the second sliding element 20 having a sliding surface. The first sliding element 10 includes the base member 11 and the hard layer 12 as the sliding surface on the surface of the base member 11. The second sliding element 20 includes the base member 21 and the hard layer 22 as the sliding surface on the surface of the base member 21. The sliding surface of the first sliding element 10 and the sliding surface of the second sliding element 20 come in contact with each other with the water layer 30 in between to allow the first sliding element 10 and the second sliding element 20 to slide relative to each other. At least one of the hard layer 12 in the first sliding element 10 or the hard layer 22 in the second sliding element 20 includes the nanosilica layer 13 or 23 supporting nanosilica particles.

In this structure, the nanosilica layer 13 or 23 has a surface covered with the water layer 30, allowing water-lubricated sliding with an appropriate sliding velocity under an appropriate load. The first and second sliding elements 10 and 20 can thus slide relative to each other with low friction. The sliding assembly with the simple structure can have high water lubricity.

The hard layer 12 or 22 including the nanosilica layer 13 or 23 has a surface with hydroxyl groups. The nanosilica layer 13 or 23 is supported by the hard layer 12 or 22 based on covalent bonds between the hydroxyl groups activated in the hard layer 12 or 22 and hydroxyl groups in the nanosilica particles.

This structure allows improved water-lubricated sliding with the nanosilica layer 13 or 23 supporting nanosilica particles.

In the sliding assembly 1 according to the first embodiment, the hard layer 12 in the first sliding element 10 includes the nanosilica layer 13, and the hard layer 22 in the second sliding element 20 includes the nanosilica layer 23.

With the nanosilica layers 13 and 23 in the respective first and second sliding elements 10 and 20, this structure allows improved water-lubricated sliding further.

Each of the hard layers 12 and 22 has a Vickers hardness of 1000 Hv or higher.

With the hard layers 12 and 22 each having a Vickers hardness of 1000 Hv or higher, this structure allows low-friction sliding.

In the sliding assembly 1 according to the first embodiment and the sliding assembly 2 according to the second embodiment, at least one of the hard layer 12 in the first sliding element 10 or the hard layer 22 in the second sliding element 20 is formed from diamond-like carbon on a surface of the base member 11 or 21. The diamond-like carbon may specifically contain silicon.

This structure including the hard layer 12 or 22 formed from diamond-like carbon on the surface of the base member 11 or 21 reliably allows low-friction sliding.

In the sliding assembly 3 according to the third embodiment, at least one of the hard layer 12 in the first sliding element 10 or the hard layer 22 in the second sliding element 20 is a part of the base member 11 or 21. The base member 11 or 21 including the hard layer 12 or 22 is formed from a ceramic material.

This structure uses a sufficiently hard material (e.g., a ceramic material such as silicon nitride or silicon carbide) as the base member 11 or 21 that can also serve as the hard layer 12 or 22, and thus has a still simpler structure to have high water lubricity.

In the sliding assembly 4 according to the fourth embodiment, the hard layer 12 in the first sliding element 10 is a part of the base member 11, and the hard layer 22 in the second sliding element 20 is a part of the base member 21. Each of the base member 11 including the hard layer 12 and the base member 21 including the hard layer 22 is formed from a ceramic material.

This structure uses a sufficiently hard material (e.g., a ceramic material such as silicon nitride or silicon carbide) as the base members 11 and 21 that can also serve as the hard layers 12 and 22, and thus has a still simpler structure to have high water lubricity.

### Examples

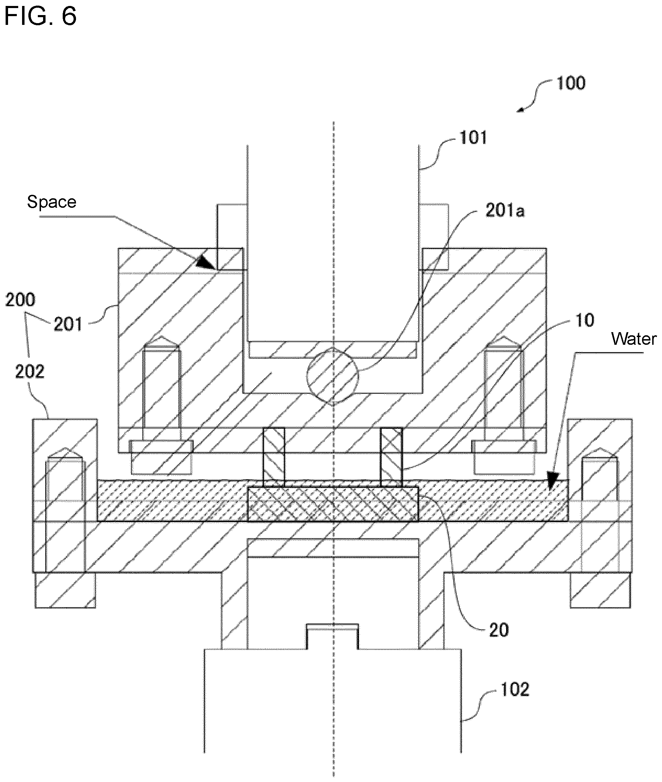

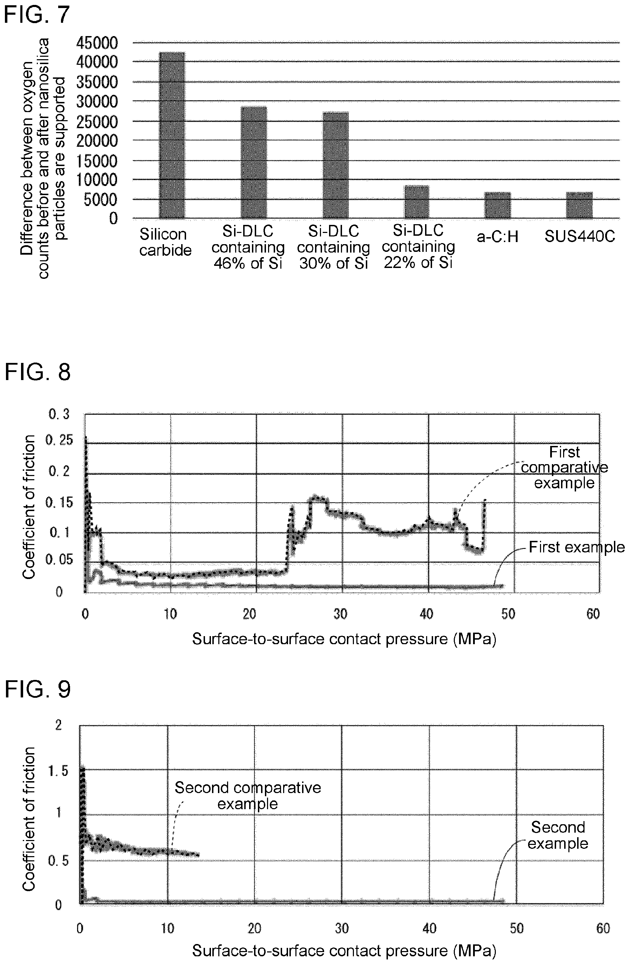

Examples in the above embodiments will be described below. An overview of a friction and wear test common to the examples will now be described with reference to FIGs. 5 to 7. FIG. 5 is a perspective view of a pair of test pieces to undergo the friction and wear test. FIG. 6 is a cross-sectional view of a friction and wear tester 100 and test tools 200 used in the friction and wear test. FIG. 7 is a graph showing the difference between oxygen counts on test pieces before and after nanosilica particles are supported.

In each example, a ring-on-disk test was conducted using, as shown in FIG. 5, a pair of test pieces, or a ring test piece and a disk test piece, as the first sliding element 10 and the second sliding element 20 included in each of the sliding assemblies 1 to 4 according to the first to fourth embodiments. Each ring test piece as the first sliding element 10 is a ring having an outer diameter of 16 mm and an inner diameter of 11.4 mm and has a thickness of 7 mm. Each disk test piece as the second sliding element 20 is a square having sides of 20 mm and has a thickness of 4 mm.

The friction and wear tests in the examples were conducted with a friction and wear tester, EFM-III-H model, (A&D Company, Limited). As shown in FIG. 6, the friction and wear tester 100 includes a loading assembly 101 in its upper portion for applying a downward load and a rotation assembly 102 in its lower portion for rotating one of the pair of test pieces.

The test tools 200 were used to attach the ring test piece (first sliding element 10) and the disk test piece (second sliding element 20) to the friction and wear tester 100. The test tools 200 include an upper tool 201 for attaching the ring test piece to the loading assembly 101 and a lower tool 202 for attaching the disk test piece to the rotation assembly 102. The upper tool 201 can change its angle relative to the loading assembly 101 with a steel ball 201a in between, causing the ring test piece to directly face the disk test piece constantly. The lower tool 202 has an upper surface with a recess that can store water. Water is supplied into the recess on the upper surface of the lower tool 202 to cause the surfaces of the ring test piece and the disk test piece facing and stacked on each other to be in the water.

In each example, a scanning electron microscope and an energy-dispersive X-ray detector are used for counting the amount of oxygen on the test pieces to determine the difference between oxygen counts before and after nanosilica particles are supported (refer to FIG. 7). The amount of nanosilica particles being supported can be estimated by counting the amount of oxygen that is contained in the nanosilica layer but is not contained in the hard layer. The counted amount of oxygen differs based on the amount of surface hydroxyl groups on the hard layers. The above method can thus observe the amount of nanosilica particles being supported.

### First Example

A ring test piece (first sliding element 10) in a first example includes a hard layer 12 being a Si-DLC coating containing 25% of Si and a nanosilica layer 13 supporting nanosilica particles having a particle size of 9 nm. Similarly, a disk test piece (second sliding element 20) in the first example includes a hard layer 22 being a Si-DLC coating containing 25% of Si and a nanosilica layer 23 supporting nanosilica particles having a particle size of 9 nm.

The test conditions include the sliding velocity of 12 mm/s, a test piece with the dimensions of ϕ16 × ϕ11.4 × 7 mm (indicating an outer diameter of 16 mm, an inner diameter of 11.4 mm, and a thickness of 7 mm, the same applies to the other examples) used as the ring test piece, and a test piece with the dimensions of 20 × 20 × 4 mm used as the disk test piece. A normal load of 50 N was applied for 60 seconds. Subsequently, from 200 to 4800 N, a load of 200 N greater than the preceding load was applied for 30 seconds per load. A load of 4800 N was maintained for 60 seconds until the end of the test.

### First Comparative Example

For comparison with the first example, a friction and wear test was conducted under the same test conditions in a first comparative example. A ring test piece in the first comparative example includes a hard layer 12 being a Si-DLC coating containing 25% of Si and supports no nanosilica particles. Similarly, a disk test piece in the first comparative example includes a hard layer 22 being a Si-DLC coating containing 25% of Si and supports no nanosilica particles. The same test conditions as in the first example were used.

### Test Results of First Example and First Comparative Example

FIG. 8 is a graph showing friction and wear test results of the first example and the first comparative example. In the graph in FIG. 8, the vertical axis indicates the coefficient of friction, and the horizontal axis indicates the surface-to-surface contact pressure (the same applies to FIGs. 9 to 12). As shown in FIG. 8, the surface-to-surface contact pressure during sliding reaches at least 48.5 MPa in the first example and 24 MPa in the first comparative example. The surface-to-surface contact pressure (in MPa) is the value of the normal load (in N) divided by the contact area (about 100 mm square) between the ring test piece and the disk test piece. The coefficient of friction during low-friction sliding is lower in the first example than in the first comparative example, thus indicating low friction. The results indicate that the nanosilica layers contribute to improving water-lubricated sliding. Low-friction sliding herein refers to sliding with a coefficient of friction of 0.1 or lower.

### Second Example

A ring test piece (first sliding element 10) in a second example includes a hard layer 12 being a DLC coating containing 0% of Si (hydrogenated amorphous carbon, hereafter referred to as a-C:H) and a nanosilica layer 13 supporting nanosilica particles having a particle size of 9 nm. Similarly, a disk test piece (second sliding element 20) in the second example includes a hard layer 22 being a DLC coating containing 0% of Si (a-C:H) and a nanosilica layer 23 supporting nanosilica particles having a particle size of 9 nm.

The test conditions include the sliding velocity of 12 mm/s, a test piece with the dimensions of cp16 × ϕ11.4 × 7 mm used as the ring test piece, and a test piece with the dimensions of 20 × 20 × 4 mm used as the disk test piece. A normal load of 50 N was applied for 60 seconds. Subsequently, from 200 to 4800 N, a load of 200 N greater than the preceding load was applied for 30 seconds per load. A load of 4800 N was maintained for 60 seconds until the end of the test.

### Second Comparative Example

A ring test piece in a second comparative example includes no hard layer 12 (a base member being SUS440C) and includes a nanosilica layer 13 supporting nanosilica particles having a particle size of 9 nm. Similarly, a disk test piece in the second comparative example includes no hard layer 22 (a base member being SUS440C) and includes a nanosilica layer 23 supporting nanosilica particles having a particle size of 9 nm. The same test conditions as in the second example were used.

### Test Results of Second Example and Second Comparative Example

FIG. 9 is a graph showing friction and wear test results of the second example and the second comparative example. In other words, the graph in FIG. 9 shows data comparing, among the hard layers supporting nanosilica particles, the a-C:H in the second example with the SUS440C in the second comparative example having a Vickers hardness Hv of 653 (common value). In the second example and the second comparative example, two sliding surfaces (hard layers 12 and 22) each support silica particles. With the a-C:H in the second example, the surface-to-surface contact pressure during low-friction sliding reaches at least 48.5 MPa. With the SUS440C in the second comparative example, low friction is not achieved. This indicates that the hardness of the hard layers 12 and 22 contributes to improving water-lubricated sliding.

### Third Example

In a third example, a test is conducted to confirm the effects of the second embodiment. A ring test piece (first sliding element 10) in the third example includes a hard layer 12 being a DLC coating containing 0% of Si (a-C:H) and supports no nanosilica particles. A disk test piece (second sliding element 20) in the second example includes a hard layer 22 being a DLC coating containing 25% of Si and a nanosilica layer 23 supporting nanosilica particles having a particle size of 9 nm.

The test conditions include the sliding velocity of 12 mm/s, a test piece with the dimensions of ϕ16 × ϕ11.4 × 7 mm used as the ring test piece, and a test piece with the dimensions of 20 × 20 × 4 mm used as the disk test piece. A normal load of 50 N was applied for 60 seconds. Subsequently, from 200 to 4800 N, a load of 200 N greater than the preceding load was applied for 30 seconds per load. A load of 4800 N was maintained for 60 seconds until the end of the test.

### Test Results of Third Example

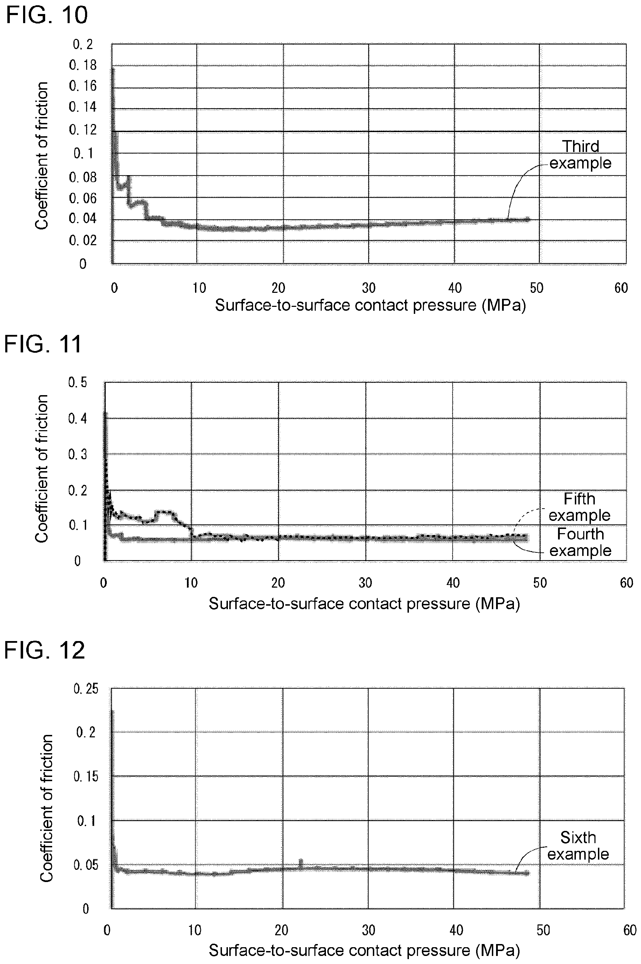

FIG. 10 is a graph showing friction and wear test results of the third example. The ring test piece includes the hard layer 12 of a-C:H and supports no silica particles. The disk test piece includes the hard layer 22 being a Si-DLC coating containing 25% of Si and supports nanosilica particles having a particle size of 9 nm. As shown in FIG. 10, the surface-to-surface contact pressure during low-friction sliding reaches at least 48.5 MPa. The results of the third example indicate that low friction is achieved with a single surface (hard layer 22) alone supporting silica particles.

### Fourth Example

In a fourth example, a test is conducted to confirm the effects of the third embodiment. A ring test piece (first sliding element 10) in the fourth example includes a hard layer 12 being a DLC coating containing 0% of Si (a-C:H) and supports no nanosilica particles. A disk test piece (second sliding element 20) in the fourth example includes a base member 21 (also serving as a hard layer 22) of silicon nitride and a nanosilica layer 23 supporting nanosilica particles having a particle size of 9 nm.

The test conditions include the sliding velocity of 12 mm/s, a test piece with the dimensions of ϕ16 × ϕ11.4 × 7 mm used as the ring test piece, and a test piece with the dimensions of 20 × 20 × 4 mm used as the disk test piece. A normal load of 50 N was applied for 60 seconds. Subsequently, from 200 to 4800 N, a load of 200 N greater than the preceding load was applied for 30 seconds per load. A load of 4800 N was maintained for 60 seconds until the end of the test.

### Fifth Example

In a fifth example, similarly to the fourth example, a test was conducted to confirm the effects of the third embodiment. A ring test piece (first sliding element 10) in the fifth example includes a hard layer 12 being a DLC coating containing 0% of Si (a-C:H) and supports no nanosilica particles. A disk test piece (second sliding element 20) in the fifth example includes a base member 21 (also serving as a hard layer 22) of silicon carbide and a nanosilica layer 23 supporting nanosilica particles having a particle size of 9 nm. The same test conditions as in the fourth example were used.

### Test Results of Fourth Example and Fifth Example

FIG. 11 is a graph showing friction and wear test results of the fourth example and the fifth example. FIG. 11 shows the friction test results of the ring-on-disk tests with the base member 21 being silicon nitride or silicon carbide. As shown in FIG. 11, the surface-to-surface contact pressure during low-friction sliding reaches at least 48.5 MPa. This indicates that the hard layer 22 may not be a coating of a hard film of, for example, DLC, and the sufficiently hard base member 21 can also serve as the hard layer 22.

### Sixth Example

A ring test piece (first sliding element 10) in a sixth example includes a hard layer 12 being a DLC coating containing 25% of Si and a nanosilica layer 13 supporting nanosilica particles having a particle size of 9 nm. A disk test piece (second sliding element 20) in the sixth example includes a hard layer 22 being a DLC coating containing 25% of Si and a nanosilica layer 23 supporting nanosilica particles having a particle size of 9 nm.

The test conditions include the sliding velocity of 100 mm/s, a test piece with the dimensions of cp 16 × ϕ11.4 × 7 mm used as the ring test piece, and a test piece with the dimensions of 20 × 20 × 4 mm used as the disk test piece. A normal load of 50 N was applied for 60 seconds. Subsequently, from 200 to 4800 N, a load of 200 N greater than the preceding load was applied for 30 seconds per load. A load of 4800 N was maintained for 60 seconds until the end of the test.

### Test Results of Sixth Example

FIG. 12 is a graph showing friction and wear test results of the sixth example, showing friction test results of the ring-on-disk test with the sliding velocity changed to 100 mm/s. As shown in FIG. 12, the surface-to-surface contact pressure during low-friction sliding reaches at least 48.5 Mpa. The results of the sixth example show that low-friction sliding is maintained with a sliding velocity of 100 mm/s.

### Seventh Example

In a seventh example, a test was conducted to confirm the effects of the fourth embodiment. A ring test piece (first sliding element 10) in the seventh example includes a base member 11 of silicon carbide ceramic also serving as a hard layer 12 and a nanosilica layer 13 supporting nanosilica particles having a particle size of 9 nm. Similarly to the ring test piece, a disk test piece (second sliding element 20) in the seventh example includes a base member 21 of silicon carbide ceramic also serving as a hard layer 22 and a nanosilica layer 23 supporting nanosilica particles having a particle size of 9 nm.

The test conditions include the sliding velocity of 300 mm/s, a test piece with the dimensions of ϕ16 × ϕ11.4 × 7 mm used as the ring test piece, and a test piece with the dimensions of 20 × 20 × 4 mm used as the disk test piece. A normal load of 50 N was applied for 60 seconds. Subsequently, a load of 200 N and then a load of 200 N greater than the preceding load were applied for 30 seconds per load. At 1080 N, the coefficient of friction increased until the end of the test.

### Third Comparative Example

For comparison with the seventh example, a friction and wear test was conducted under the same test conditions in a third comparative example. A ring test piece (first sliding element 10) in the third comparative example includes a base member 11 of silicon carbide ceramic also serving as a hard layer 12 and supports no nanosilica particles. Similarly to the ring test piece, a disk test piece (second sliding element 20) in the seventh example includes a base member 21 of silicon carbide ceramic also serving as a hard layer 22 and supports no nanosilica particles. A normal load of 50N was applied for 60 seconds. Subsequently, a load of 200 N and then a load of 200 N greater than the preceding load were applied for 30 seconds per load. At 400 N, the coefficient of friction increased until the end of the test.

### Test Results of Seventh Example and Third Comparative Example

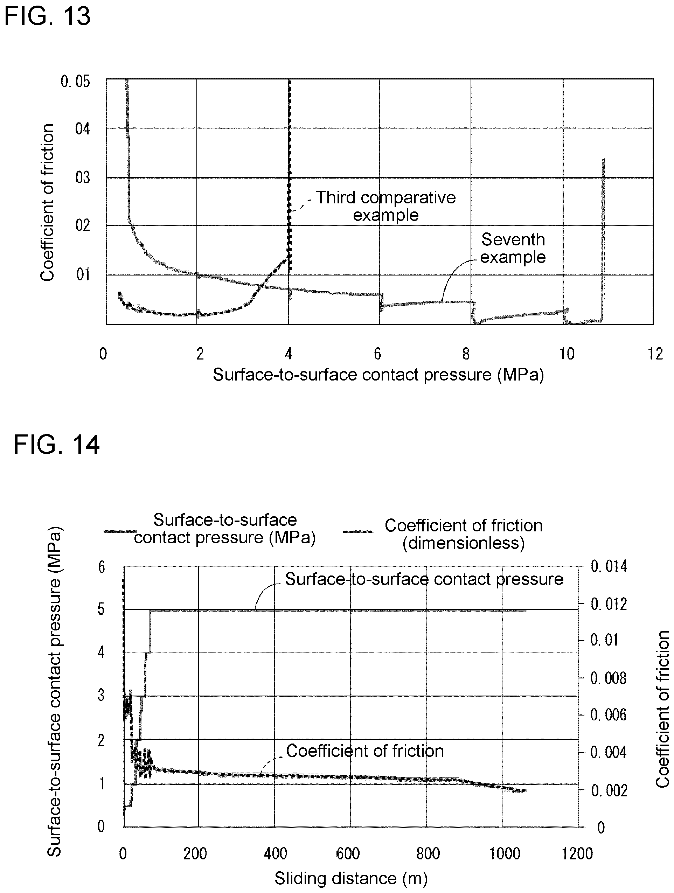

FIG. 13 is a graph showing friction and wear test results of the seventh example and the third comparative example. In the graph in FIG. 13, the vertical axis indicates the coefficient of friction, and the horizontal axis indicates the surface-to-surface contact pressure. As shown in FIG. 13, the surface-to-surface contact pressure during sliding reaches 10 Mpa in the seventh example as the load applied in a stepwise manner. In contrast, the surface-to-surface contact pressure is 4 Mpa in the third comparative example. The minimum coefficient of friction in the seventh example is lower than or equal to 0.001, which is below 0.01, thus achieving ultralow-friction sliding. The ultralow-friction sliding herein refers to sliding with a coefficient of friction lower than or equal to 0.01.

### Eighth Example

In an eighth example, a test was conducted to confirm that ultralow friction is stably maintained at a sliding distance of 1000 m in the seventh example. A ring test piece (first sliding element 10) in the eighth example includes a base member 11 of silicon carbide ceramic also serving as a hard layer 12 and a nanosilica layer 13 supporting nanosilica particles having a particle size of 9 nm. Similarly to the ring test piece, a disk test piece (second sliding element 20) in the seventh example includes a base member 21 of silicon carbide ceramic also serving as a hard layer 22 and a nanosilica layer 23 supporting nanosilica particles having a particle size of 9 nm.

The test conditions include the sliding velocity of 300 mm/s, a test piece with the dimensions of ϕ16 × ϕ11.4 × 7 mm used as the ring test piece, and a test piece with the dimensions of 20 × 20 × 4 mm used as the disk test piece. A normal load of 50 N was applied for 60 seconds. Subsequently, from 100 to 500 N, a load of 100 N greater than the preceding load was applied for 30 seconds per load. A load of 500 N was maintained until the sliding distance reached 1000 m.

### Test Results of Eighth Example

FIG. 14 is a graph showing friction and wear test results of the eighth example, with the left vertical axis indicating the surface-to-surface contact pressure, the right vertical axis indicating the coefficient of friction, and the horizontal axis indicating the sliding distance. In the eighth example, as shown in FIG. 14, the coefficient of friction is about 0.002, which is below 0.01, with the surface-to-surface contact pressure being 5 Mpa for the sliding distance up to 1000 m. This indicates that sliding occurs with ultralow friction being maintained.

### Ninth Example

A ring test piece (first sliding element 10) in a ninth example includes a hard layer 12 being a DLC coating containing 50% of Si and a nanosilica layer 13 supporting nanosilica particles having a particle size of 9 nm. A disk test piece (second sliding element 20) in the eighth example includes a hard layer 22 being a DLC coating containing 50% of Si and a nanosilica layer 23 supporting nanosilica particles having a particle size of 9 nm.

The test conditions include the sliding velocity of 300 mm/s, a test piece with the dimensions of ϕ16 × ϕ11.4 × 7 mm used as the ring test piece, and a test piece with the dimensions of 20 × 20 × 4 mm used as the disk test piece. A normal load of 50 N was applied for 60 seconds. Subsequently, a load of 200 N and then a load of 200 N greater than the preceding load were applied for 30 seconds per load. At 1200 N, the coefficient of friction increased until the end of the test.

### Test Results of Ninth Example

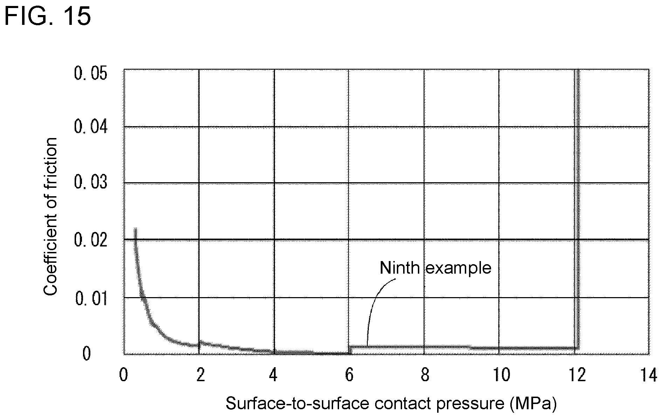

FIG. 15 is a graph showing friction and wear test results of the ninth example. In the ninth example, as shown in FIG. 15, the coefficient of friction is far below 0.01 for the surface-to-surface contact pressure being 1 to 12 MPa, indicating that ultralow-friction sliding with the coefficient of friction below 0.01 is achieved.

### Modifications

The present invention is not limited to the embodiments or the examples described above and may be modified in various manners without departing from the spirit of the present invention. Although the first sliding element 10 is a ring test piece and the second sliding element 20 is a disk test piece in the examples described above, these elements are not limited to such pieces. For example, the first sliding element 10 and the second sliding element 20 may be a larger-diameter cylinder and a smaller-diameter cylinder, and water-lubricated sliding may occur between the inner circumferential surface of the larger-diameter cylinder and the outer circumferential surface of the smaller-diameter cylinder. In other embodiments, the first sliding element 10 and the second sliding element 20 may be a pair of plates or blocks each having a flat sliding surface, and water-lubricated sliding may occur between the flat sliding surfaces.

### INDUSTRIAL APPLICABILITY

The structure according to one or more embodiments of the present invention may be used for a sliding assembly and a device including the sliding assembly. Such a sliding assembly includes a first sliding element and a second sliding element each having a sliding surface. The sliding surfaces come in contact with each other with a water layer in between to allow the first and second sliding elements to slide relative to each other. The sliding assembly can be, for example, used as a sliding assembly in, for example, a seal for a fluid device such as a piston ring and a cylinder, a slide bearing, or a mechanical seal for a rotary shaft, or in various fields including vehicles and machine tools using the sliding assembly.

### REFERENCE SIGNS LIST

- 1: sliding assembly (first embodiment)
- 2: sliding assembly (second embodiment)
- 3: sliding assembly (third embodiment)
- 4: sliding assembly (fourth embodiment)
- 10: first sliding element
- 11: base member
- 12: hard layer
- 13: nanosilica layer
- 20: second sliding element
- 21: base member
- 22: hard layer
- 23: nanosilica layer
- 30: water layer

## Claims

1. A sliding assembly, comprising:
a first sliding element having a sliding surface, the first sliding element including a first base member and a first hard layer as the sliding surface on a surface of the first base member; and
a second sliding element having a sliding surface, the second sliding element including a second base member and a second hard layer as the sliding surface on a surface of the second base member,
wherein the sliding surface of the first sliding element and the sliding surface of the second sliding element come in contact with each other with a water layer in between to allow the first sliding element and the second sliding element to slide relative to each other, and
at least one of the first hard layer in the first sliding element or the second hard layer in the second sliding element includes a nanosilica layer supporting nanosilica particles.

2. The sliding assembly according to claim 1, wherein
the at least one of the first hard layer or the second hard layer has a surface with hydroxyl groups.

3. The sliding assembly according to claim 1, wherein
the nanosilica layer is supported by the at least one of the first hard layer or the second hard layer based on covalent bonds between the hydroxyl groups activated in the at least one of the first hard layer or the second hard layer and hydroxyl groups in the nanosilica particles.

4. The sliding assembly according to any one of claims 1 to 3, wherein
each of the first hard layer in the first sliding element and the second hard layer in the second sliding element includes the nanosilica layer.

5. The sliding assembly according to any one of claims 1 to 3, wherein
each of the first hard layer and the second hard layer has a Vickers hardness of 1000 Hv or higher.

6. The sliding assembly according to claim 5, wherein
at least one of the first hard layer in the first sliding element or the second hard layer in the second sliding element comprises diamond-like carbon on a surface of at least one of the first base member or the second base member.

7. The sliding assembly according to claim 6, wherein
the diamond-like carbon comprises silicon.

8. The sliding assembly according to any one of claims 1 to 3, wherein
at least one of the first hard layer in the first sliding element or the second hard layer in the second sliding element is a part of at least one of the first base member or the second base member.

9. The sliding assembly according to claim 8, wherein
the at least one of first base member or the second base member including the at least one of the first hard layer or the second hard layer comprises a ceramic material.

10. The sliding assembly according to claim 8, wherein
the first hard layer in the first sliding element is a part of the first base member, and the second hard layer in the second sliding element is a part of the second base member, and
each of the first base member including the first hard layer and the second base member including the second hard layer comprises a ceramic material.
